# EUROPEAN PATENT APPLICATION

(11) **EP 0 887 756 A2**
(43) Date of publication of application: **30.12.1998**
(21) Application number: 98304123.7
(22) Date of filing: 26.05.1998
(51) Int. Cl.: G06F 17/60

(54) **Ticket system**

(30) Priority: 07.06.1997 GB 9711809; 15.01.1998 GB 9800720
(71) Applicant: Ashe, David Joseph, Drogheda, Co. Louth (IE)
(72) Inventor: Ashe, David Joseph, Drogheda, Co. Louth (IE)
(74) Representative: Swindell & Pearson

(57) **Abstract**

An airline ticket system 10 has a plurality of terminals 12,14,16 connected at 18 to provide common access to stored information. The terminal 12 is used by a customer, travel agent or official to effect purchase of travel facilities. The second terminal 14 is used, preferably by the customer, to effect check-in of the customer at the airport. The third terminal 16 allows an airline employee to conduct appropriate security checks.

## Description

The present invention relates to ticket systems and in particular, but not exclusively, to airline ticket systems.

The increasing popularity of air travel causes airlines to seek ways in which the process of buying and using air travel can be made more convenient for the customer. However, the vulnerability of airlines to security problems makes it important to ensure adequate security arrangements exist. These contrasting requirements present a dilemma to the airline.

The invention provides a travel ticket system comprising a plurality of terminal means connected together to provide common access to stored information, the terminals including at least one first terminal means operable to effect a purchase of travel facilities and to provide data relating to the travel facilities purchased, at least one second terminal means operable in response to the data to effect check-in of a customer prior to travel, and at least one third terminal means operable by an official and in response to the data to provide sufficient information to the official to allow the official to verify the match between the identity of the customer and the travel facilities.

Preferably at least one of the first terminal means is operable by the customer. Alternatively, or in addition, there may be first terminal means operable by a travel agent or official. The second terminal means is preferably operable by the customer.

Preferably the data is provided by writing to a token able to carry data. Preferably the data on the token is in encoded form. The token may carry data in machine-readable form and also in human-readable form to allow the customer to verify the machine-readable data. The human-readable data may be printed. The data may be sufficient to identify a record of the purchase, the record being held within the system. The token may be produced by the first terminal means or the first terminal means may write data to a token provided by the customer.

Preferably the customer is required to provide personal identification data to at least one terminal before the terminal will respond to data provided by the first terminal.

Preferably the second terminal means is operable to provide information to the customer and to receive and record preferences of the customer in relation to seat allocation. Preferably the second terminal means provides the customer with baggage identification means. The second terminal means may incorporate printer means for producing baggage identification means. Preferably the third terminal means provides sufficient information to allow the official to verify the match between the identity of the customer and the baggage identification means.

Preferably the terminals are so connected as to allow the first terminal to be at a location remote from the other terminals, preferably being at another site. The terminals may be connected together to form a computer network, which may further comprise data storage means accessible from each terminal.

The travel facilities may be air travel, and at least the second and third terminals may be located at an airport.

The invention also provides a method of ticketing, in which a plurality of terminal means are provided with common access to stored information, and in which a first terminal means is used to effect a purchase of travel facilities and to provide data relating to the travel facilities purchased, a second terminal means is used in response to the data to effect check-in of the customer prior to travel, and a third terminal means is used by an official in response to the data to provide information to the official, and in which the official uses information provided by the third terminal means to verify the match between the identity of the customer and the travel facilities.

Preferably at least one of the first terminal means is operable by the customer. Alternatively, or in addition, there may be first terminal means operable by a travel agent or official. The second terminal means is preferably operable by the customer.

Preferably the data is carried by a token. Preferably the first terminal means encodes data on the token. Preferably the data is encoded in machine-readable form and also provided in human-readable form on the token, to allow the customer to verify the machine-readable data. Preferably the human-readable data is printed. The data on the token may be sufficient to identify a record of the purchase, the record being held within the system. The token is preferably produced by the first terminal means, or the first terminal means may write data to a token provided by the customer.

Preferably at least one terminal means is disabled from reading data from the token until receiving personal identification data from a customer.

Preferably the second terminal means provides information to the customer and receives and records preferences of the customer in relation to seat allocation. Preferably the second terminal means provides the customer with baggage identification means. The second terminal means may print baggage identification means. The third terminal means may provide sufficient information to allow the official to verify the match between the customer and the baggage identification means.

Preferably the terminals are connected to allow the first terminal to be at a location remote from the other terminals, preferably at another site. The terminals may be connected to form a computer network, which may have further data storage means. The travel facilities are preferably air travel, and at least the second and third terminals are preferably located at an airport.

An example of a system according to the present invention, and its method of operation, will now be described in more detail, by way of example only and with reference to the accompanying drawings in which:
Fig. 1 is a schematic diagram of the complete system for an airline ticket system;
Fig. 2 is a schematic representation of a ticket issued by the system; and
Fig. 3 is a schematic representation of a baggage tag issued by the system.

Turning to the drawings, there is illustrated an airline ticket system 10 comprising a plurality of terminals 12,14,16 connected together at 18 to provide common access to stored information, for instance in a file server or data store 20. The first terminal 12 is operable by a customer, travel agent or official, to effect purchase of travel facilities such as an airline flight and to provide a token 22 carrying data relating to the travel facilities purchased. The second terminal 14 is operable, preferably by the customer, in response to data read from the token, to effect check-in of the customer at the airport, prior to the flight, and to provide baggage identification means 24 to the customer. The third terminal 16 is operable by an official such as an airline employee, and in response to the data read from the token 22, to provide sufficient information to the official to allow the official to verify the match between the identity of the customer, the baggage tags 24 and the flight details.

In more detail, the system 10 is based around a computer network having a central processing unit, file server, central data store or the like 20, connected in conventional manner to the terminals 12,14,16. The use of a computer network allows the terminals to be remote from each other. In the example shown, the second and third terminals 14,16 are located in an airport 26, while the first terminal 12 may be at a remote location 28 such as the offices of a travel agent.

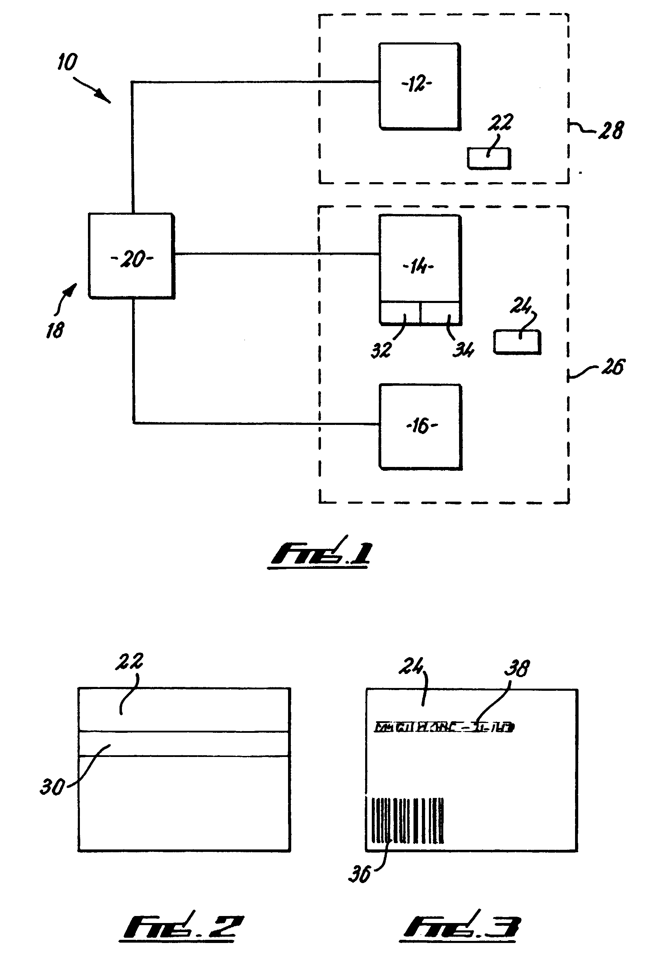

The first terminal 12 incorporates a device for writing data to a token 22, which may be a credit-card sized card incorporating a magnetic strip 30 (Fig. 2) able to record data written to the token 22 by the terminal 12. The terminal 12 is used by the customer (or travel agent or official) to make a booking of a flight and will thus also require data input facilities such as a keyboard and screen. The terminal may be configured differently according to whether it is intended to be used by a customer or by an agent or official. When the customer has selected and paid for a flight in generally conventional manner, a record of the flight reservation is made in the system, in the central store 20. The first terminal is then operated to issue a token 22 on which the strip 30 records information relating to the travel facilities purchased. This could be full details of the chosen flight, preferably in encoded form, or could be a code number (such as a unique booking number) identifying the full details in the store 20. The machine-readable form in which the information is stored in the strip 30 can be supplemented by printing data on the token 22. This allows the user to verify that correct information has been recorded by the system, on the basis that if the printed data is correct, the magnetic data in the strip 30 should correspond and thus be correct.

It is apparent from the above description that this stage of the operation can be conducted in advance of the stages to be described below, possibly many months in advance, and at a location remote from the airport. This stage is equivalent to conventional purchasing of a flight ticket, but can be wholly automated, Tequiring no staff, but merely requiring access by the customer to the terminal 12.

Many terminals 12 could be provided in appropriate locations, such as travel agents' offices, each connected back to the CPU 20, to encourage sales of travel facilities by providing convenient customer access.

The second and third terminals 14,16 are located at the airport 26 and used when the customer has arrived at the airport to embark. First, the customer (or an official) uses the second terminal 14 by inserting the token 22 into a card reader. This will read the data encoded onto the strip 30 by the first terminal 12, but will not respond to it until the customer has entered some form of identification, such as a personal identification number provided to the customer at the time the token 22 was issued, or other personal information such as date of birth. The second terminal 14 will compare this identification data with data held in the CPU 20 and if it corresponds, allow the customer to begin using the second terminal 14.

The customer uses the second terminal 14 to check-in for the flight, using a keyboard and screen, or other data input facilities. For instance, the customer will confirm that they have arrived at the airport in time for the flight and may be allowed interaction with the system 10 to select a preferred seat, such as by answering questions in relation to a wish to smoke or have a non-smoking seat, a window seat, aisle seat etc.

Other information will be supplied to the system at this stage, including details of the baggage to be checked in. It may be appropriate for the second terminal 14 to incorporate scales 32 to weigh the baggage. Once the baggage to be checked in has been identified, and weighed if appropriate, the second terminal 14 uses a printer 34 to print baggage tags 24 (Fig. 3). These preferably incorporate machine-readable data, such as a bar code 36 and may also incorporate printed information 38, such as flight details.

It can again be seen that by providing a keyboard and display screen at the second terminal 14, and by appropriate design of software to interrogate the customer in an appropriate manner, the whole of the interaction with the second terminal 14 can be made automatic, requiring no human intervention other than from the customer, but an official, such as an airline employee, could be present to operate the second terminal, if desired.

The final stage of the operation is for the customer to approach the third terminal 16, with the token 22, and baggage labelled with the baggage tags 24. The third terminal 16 differs from the other terminals in that it must be operated by an official, such as a security employee, rather than by the customer. This is important in ensuring some human intervention in the process, in the interests of security. The customer is now required to provide the token 22 and authorise its use by identifying himself, such as by providing a passport or the personal identification number as discussed above. Once this step has been correctly completed, the third terminal 16 can obtain details of the baggage tags 24 printed by the second terminal 14, by checking information held at 20. This, and any other information such as boarding gates, departure times etc. can be displayed for the official to see. In particular, the official is provided with sufficient information to ensure that the customer is checking in the correct amount of baggage, and can check the baggage tags 24 to ensure that they are the ones issued by the second terminal 14 to that customer. The bar codes 36 may assist in this assessment, if the third terminal 16 is provided with a bar code reader.

When the official is satisfied that the token 22 has been presented by the correct customer, and that the baggage tags 24 correspond to those printed for the customer by the second terminal, and has completed any other security checks required, the customer can be allowed to proceed to the aircraft, having left the baggage in secure storage for loading onto the aircraft in conventional manner. If desired, the third terminal may be arranged to print a boarding pass to be retained by the customer until the aircraft has been boarded.

It can thus be seen that virtually the whole process of booking and paying for a flight, checking in at the airport and boarding the flight has been automated by the system 10, except for the final check at the third terminal. This ensures that adequate human involvement (in the form of the official at the third terminal 16) is retained in order to allow adequate security checks to be undertaken. The whole process is therefore made more efficient and thus more convenient for the customer and more economic for the airline, but without sacrificing security or safety requirements. Many second and third terminals could be provided at the airport, to assist in preventing or reducing queuing. It is envisaged that several airlines could share access to the central information at 20, so that a customer can check-in for any flight at any of the second terminals. This is expected to further alleviate queuing problems associated with busy airports.

Many variations and modifications can be made to the apparatus described above without departing from the scope of the invention. In particular, many different designs of terminal could be used. They could be conventional computers running appropriate software, or could be purpose built to make their operation easier for the customer. The tokens 22 have been described as storing data by magnetic strip, but other arrangements such as printing, bar code printing, punched holes or the like could alternatively be used. It is envisaged that the token could incorporate an electronic memory device, as used in "SMART" cards. Moreover, while it has been assumed that the token 22 would be produced afresh for the customer at the time the travel facilities are purchased, it may be possible to use an existing token held by the customer, such as a membership card to a club run by the airline, or perhaps even a credit card, to allow the terminal 12 to write data to the existing token, rather than producing a new token.

A further alternative could be used to render the system wholly or virtually ticketless and paperless. In this arrangement, the first terminal 12 would be used to make a reservation in the manner described above, but instead of producing a token 22 containing data, a personal identification number, called a personal check-in number (PCN) would be allocated to the customer in relation to the reservation, and would be made known to the customer by the first terminal 12. It is possible to envisage that the PCN would be displayed by the first terminal for the customer to memorise, there being no other physical record of the PCN. That would minimise any risk of fraud arising from an unauthorised person gaining knowledge of the PCN, but would place a high demand on the customer to remember the PCN accurately. In practice, it is likely to be necessary to provide a written confirmation of the PCN but this could be provided either at the time of using the first terminal 12, or subsequently, such as by post to the known address of the customer.

When the customer wishes to check in for a flight, the customer would use the second terminal 14 but not by inserting the token 22 as described above. Instead, the customer would use the PCN to identify themselves to the second terminal, possibly also using other personal information for confirmation, such as a date of birth, address or other personal information previously entered into the system, preferably through the first terminal as part of the reservation process. The PCN is then used by the system to identify full details of the reservation, stored in the CPU 20. If the PCN and other data entered by the customer is sufficient to persuade the system that the customer is genuine, the second terminal can then be used as described above, to select a preferred seat, check-in, and enter details of the baggage to be checked in, including weighing the baggage, if appropriate. Baggage tags can then be printed as described above.

The third terminal is then used generally as described above, but again without use of a token 22. Instead of the token, the PCN is provided to the official using the third terminal, again being supported by other information as necessary, according to the desired degree of security in the system, and once the customer has successfully provided the necessary information, they can be allowed to proceed to the aircraft. Again, the third terminal could print a boarding pass to be retained by the customer until the aircraft has been boarded, or final boarding could be controlled again by using the PCN.

It can again be seen that in this arrangement, the system is almost wholly automated, but adequate human involvement is provided at the third terminal 16, to allow security issues to be appropriately dealt with. In addition to a substantial reduction of staff requirements, the system can be theoretically paperless (apart from baggage tags), but in practice is unlikely to be wholly paperless, for reasons explained above.

It is envisaged that this alternative arrangement would further reduce queuing times for customers, giving a consequently higher level of customer satisfaction. Staffing requirements would be reduced, particularly at quiet times, such as late in the evening. The reduction or elimination of paper would result in lower ticket handling costs and thus overall, the system would provide a greater efficiency than conventional arrangements, primarily through increased automation.

Whilst endeavouring in the foregoing specification to draw attention to those features of the invention believed to be of particular importance it should be understood that the Applicant claims protection in respect of any patentable feature or combination of features hereinbefore referred to and/or shown in the drawings whether or not particular emphasis has been placed thereon.

## Claims

1. A travel ticket system comprising a plurality of terminal means connected together to provide common access to stored information, the terminals including at least one first terminal means operable to effect a purchase of travel facilities and to provide data relating to the travel facilities purchased, at least one second terminal means operable in response to the data to effect check-in of a customer prior to travel, and at least one third terminal means operable by an official and in response to the data to provide sufficient information to the official to allow the official to verify the match between the identity of the customer and the travel facilities.

2. A system according to claim 1, wherein at least one of the first terminal means is operable by the customer.

3. A system according to claim 1 or 2, wherein the first terminal means are operable by a travel agent or official.

4. A system according to any preceding claim, wherein the second terminal means is operable by the customer.

5. A system according to any preceding claim, wherein the data is provided by writing to a token able to carry data.

6. A system according to claim 5, wherein the data on the token is in encoded form.

7. A system according to claim 5 or 6, wherein the token carries data in machine-readable form and also in human-readable form to allow the customer to verify the machine-readable data.

8. A system according to claim 7, wherein the human-readable data is printed.

9. A system according to any of claims 5 to 8, wherein the token is produced by the first terminal means or the first terminal means writes data to a token provided by the customer.

10. A system according to any preceding claim, wherein the data is sufficient to identify a record of the purchase, the record being held within the system.

11. A system according to any preceding claim, wherein the customer is required to provide personal identification data to at least one terminal before the terminal will respond to the data provided by the first terminal.

12. A system according to any preceding claim, wherein the second terminal means is operable to provide information to the customer and to receive and record preferences of the customer in relation to seat allocation.

13. A system according to any preceding claim, wherein the second terminal means provides the customer with baggage identification means.

14. A system according to claim 13, wherein the second terminal means incorporates printer means for producing baggage identification means.

15. A system according to claim 13 or 14, wherein the third terminal means provides sufficient information to allow the official to verify the match between the identity of the customer and the baggage identification means.

16. A system according to any preceding claim, wherein the terminals are so connected as to allow the first terminal to be at a location remote from the other terminals.

17. A system according to claim 16, wherein the first terminal is at another site.

18. A system according to any preceding claim, wherein the terminals are connected together to form a computer network.

19. A system according to claim 18, wherein the network further comprises data storage means accessible from each terminal.

20. A system according to any preceding claim, wherein the travel facilities are air travel.

21. A system according to any preceding claim, wherein at least the second and third terminals are located at an airport.

22. A travel ticket system substantially as described above, with reference to the accompanying drawings.

23. A method of ticketing, in which a plurality of terminal means are provided with common access to stored information, and in which a first terminal means is used to effect a purchase of travel facilities and to provide data relating to the travel facilities purchased, a second terminal means is used in response to the data to effect check-in of a customer prior to travel, and a third terminal means is used by an official in response to the data to provide information to the official, and in which the official uses information provided by the third terminal means to verify the match between the identity of the customer and the travel facilities.

24. A method according to claim 23, wherein at least one of the first terminal means is operable by the customer.

25. A method according to claim 23 or 24, wherein first terminal means are operable by a travel agent or official.

26. A method according to any of claims 23 to 25, wherein the second terminal means is operable by the customer.

27. A method according to any of claims 23 to 26, wherein the data is carried by a token.

28. A method according to claim 27, wherein the first terminal means encodes data on the token.

29. A method according to claim 27 or 28, wherein the data is encoded in machine-readable form and also provided in human-readable form on the token, to allow the customer to verify the machine-readable data.

30. A method according to claim 29, wherein the human-readable data is printed.

31. A method according to any of claims 27 to 30, wherein the token is produced by the first terminal means, or the first terminal means writes data to a token provided by the customer.

32. A method according to any of claims 23 to 31, wherein the data is sufficient to identify a record of the purchase, the record being held within the system.

33. A method according to any of claims 23 to 32, wherein at least one terminal means is disabled from reading data until receiving personal identification data from a customer.

34. A method according to any of claims 23 to 33, wherein the second terminal means provides information to the customer and receives and records preferences of the customer in relation to seat allocation.

35. A method according to any of claims 23 to 34, wherein the second terminal means provides the customer with baggage identification means.

36. A method according to claim 35, wherein the second terminal means may print baggage identification means.

37. A method according to claim 35 or 36, wherein the third terminal means provides sufficient information to allow the official to verify the match between the customer and the baggage identification means.

38. A method according to any of claims 23 to 37, wherein the terminals are connected to allow the first terminal to be at a location remote from the other terminals.

39. A method according to claim 38, wherein the first terminal is at another site.

40. A method according to any of claims 23 to 39, wherein the terminals are connected to form a computer network.

41. A method according to claim 40, wherein the network has further data storage means.

42. A method according to any of claims 23 to 41, wherein the travel facilities are air travel.

43. A method according to any of claims 23 to 42, wherein at least the second and third terminals are located at an airport.
